Europäisches Patentamt

European Patent Office

Office européen des brevets

(19)

(11) **EP 0 818 476 A1**

(12) **EUROPÄISCHE PATENTANMELDUNG**

(43) Veröffentlichungstag:
14.01.1998 Patentblatt 1998/03

(51) Int. Cl.⁶: $C08F\ 10/10$, $C08F\ 4/20$

(21) Anmeldenummer: 97110470.8

(22) Anmeldetag: 26.06.1997

(84) Benannte Vertragsstaaten:
AT BE CH DE DK ES FI FR GB GR IE IT LI LU MC NL PT SE

(30) Priorität: 09.07.1996 DE 19627529

(71) Anmelder: BAYER AG
51368 Leverkusen (DE)

(72) Erfinder:
• Langstein, Gerhard, Dr.
  51515 Kürten (DE)
• Bohnenpoll, Martin, Dr.
  51375 Leverkusen (DE)
• Denninger, Uwe, Dr.
  51469 Bergisch Gladbach (DE)
• Obrecht, Werner, Dr.
  47447 Moers (DE)
• Plesch, Peter, Prof. Dr.
  N. Staffordshire, ST53ND (GB)

(54) **Neue, vanadiumhaltige Initiatorsysteme für die (Co)polymerisation von Isoolefinen**

(57) Die Erfindung betrifft ein Initiatorsystem zur Polymerisation von Isoolefinen mit 4 bis 16 Kohlenstoffatomen, gegebenenfalls mit mit Isoolefinen polymerisierbaren Monomeren, bestehend aus einem oder mehreren aromatischen oder heteroaromatischen, polycyclischen Kohlenwasserstoffen und einer gealterten, organischen Lösung von Vanadiumtetrachlorid, wobei die Konzentration des Vanadiumtetrachlorids 0,01 mmol bis 500 mmol pro Liter Lösungsmittel beträgt und das molare Verhältnis von gealterten Vanadiumtetrachlorid zu polycyclischen Kohlenwasserstoffen im Bereich von 100:1 bis 1:100 liegt.

Mit Hilfe des erfindungsgemäßen Initiatorsystems ist es möglich, Polyisoolefine, insbesondere Butylkautschuke, bei relativ hohen Temperaturen mit einem nur geringen Gelanteil und einem ausreichend hohen Molekulargewicht herzustellen.

EP 0 818 476 A1

**Beschreibung**

Gegenstand der vorliegenden Erfindung ist ein neues vanadiumhaltiges Initiatorsystem zur (Co)polymerisation von Isoolefinen, ein Verfahren zur Herstellung des neuen Initiatorsystems sowie dessen Verwendung zur Herstellung von Polymeren aus Isoolefinen mit gegebenenfalls mit Isoolefinen copolymerisierbaren Monomeren, insbesondere zur Herstellung von Butylkautschuken.

Das derzeit praktizierte Herstellverfahren für Butylkautschuk ist z.B. aus Ullmanns Encyclopedia of Industrial Chemistry, Vol. A 23, 1993, bekannt. Die Durchführung der kationischen Copolymerisation von Isobuten mit Isopren im Slurryverfahren und mit Methylchlorid als Prozeßlösungsmittel erfolgt mit Aluminiumchlorid als Initiator unter Zusatz geringer Mengen von Wasser oder Chlorwasserstoff. Ebenfalls bekannt ist die Initiierung dieser Copolymerisation durch eine Kombination von tertiären Halogeniden in Kombination mit Lewis-Säuren (Kennedy, Marechal: Carbocationic Polymerisation, Wiley 1982). Beiden Verfahren ist gemeinsam, daß zur Erzielung eines für die Anwendung in der kautschukverarbeitenden Industrie ausreichend hohen Molekulargewichts Polymerisationstemperaturen von etwa -100°C erforderlich sind, was eine sehr kostenintensive Kühlung der Reaktion erfordert. Dabei gilt allgemein die Regel, daß mit steigender Temperatur die Molekulargewichte immer niedriger werden.

Bekannt ist weiterhin die Copolymerisation von Isobuten mit verschiedenen Comonomeren bei Temperaturen von ca. -40°C mit Vanadiumtetrachlorid als Initiator, der wahlweise pur oder als Lösung in Heptan eingesetzt und gegebenenfalls durch Licht oder den Zusatz aromatischer Verbindungen aktiviert wird (Miroslav Marek et al.: J. Polym. Sci. Polym. Chem. Ed. 16, 2759 - 2770 (1978); J. Pilar, L. Toman, M. Marek: J. Polym. Sci. Polym. Chem. Ed. 14, 2399 - 2405 (1976); L. Toman, M. Marek: Makromol. Chem. 177, 3325 - 3343 (1976); M. Marek et al. US 3,997,417; L. Toman, M. Marek: J. Macromol. Sci.-Chem., A15(8), 1533 - 1543 (1981); M. Marek: J. Polym. Sci. Symp. 56, 149 - 158 (1976)). Die mit diesem Verfahren hergestellten Copolymeren haben zwar eine gummiartige Konsistenz, sind jedoch als Folge eines hohen Gelanteils unlöslich und fallen während der Polymerisation in Alkanlösung oder in Masse aus, was bei einer technischen Umsetzung dieser Reaktion zu schwerwiegenden Problemen führt.

Die Homopolymerisation von Isobuten mit Vanadiumtetrachlorid als Initiator und Ammoniak (L. Toman, M. Marek: Polymer Bull. 6, 570 - 576 (1982)) als Coinitiator ist in Masse und in Lösung (Lösungsmittel Heptan) beschrieben. Die Polymerisation wurde im Temperaturbereich von -10°C bis -75°C in der Dunkelheit ausgeführt. Die Polymerisation erfolgt dabei nicht ohne die Anwesenheit von Ammoniak. Die Ausbeuten hängen vom Molverhältnis Vanadiumtetrachlorid/Ammoniak ab und erreichen ein Maximum beim Verhältnis 1:1. Die erzielten Molekulargewichte sind von diesem Verhältnis unabhängig und nehmen mit steigender Monomerkonzentration zu. Bei einer Massepolymerisation bei -75°C wurde ein Molekulargewicht (viskosimetrisch bestimmt) von 2 015 kg/mol erhalten. In Heptan bei einer Monomerkonzentration von 4,65 mol/l war der Wert nur halb so hoch. Die erhaltenen Molekulargewichte nehmen mit zunehmender Temperatur ab. Andere Polymereigenschaften, insbesondere der Gelgehalt, sind nicht angegeben.

Aus US 3,326,879 ist weiterhin die Polymerisation von olefinischen Kohlenwasserstoffen mit Vanadiumtetrachlorid in Kombination mit den verschiedensten aromatischen Verbindungen als Coinitiatoren im Temperaturbereich von -110°C bis +110°C bekannt. Nachteilig bei den in der genannten US-Patentschrift beschriebenen Verfahren ist, daß einige der angeführten Coinitiatoren, wenn sie zu mehr als 100 mol-% eingesetzt werden, die Polymerisation behindern und wie eigene Versuche zeigten, Copolymere von Isobuten mit Isopren nur mit einem hohen Gelgehalt erhalten werden. Dies gilt auch für das in der US-Patentschrift 3,997,417 beschriebene Verfahren zur Polymerisation und Copolymerisation von Monomeren mit olefinischen Doppelbindungen in Gegenwart von mehrwertigen Metallhalogeniden, z.B. Vanadiumtetrachlorid, in Gegenwart von Licht im Temperaturbereich von -140°C bis +30°C. So werden nach Beispiel 12 Copolymerisate aus Isobutylen und Isopren erhalten, die einen Gelanteil von 15 % aufweisen und nach Beispiel 11 Copolymerisate aus Isobutylen und Butadien, die einen Gelgehalt von 10 % besitzen. Die Molekulargewichte liegen je nach den Versuchsbedingungen zwischen 75 und 550 kg/mol. Ebenfalls ungeeignet für die Polymerisation bzw. Copolymerisation von monoolefinischen und diolefinischen Verbindungen ist das im US-Patent 3,998,713 beschriebene Polymerisationsverfahren unter Verwendung von vierwertigen Metallhalogeniden in Kombination mit (Erd)alkalimetallen oder deren Hydriden oder Amalgamen als Coinitiatoren unter Bestrahlung im Temperaturbereich von 0°C bis -140°C. Auch hier wird bei der Polymerisation ein hoher Gelgehalt erhalten. Die Molekulargewichte der Polymere sind selbst bei niedrigen Temperaturen unbefriedigend. Das gleiche gilt auch für die in DE 2 125 800 und DE 2 119 305 beschriebene Polymerisation und Copolymerisation von Monomeren mit olefinischen Doppelbindungen in Gegenwart von z.B. Halogeniden des vierwertigen Vanadiums mit oder ohne Licht. Die erhaltenen Molekulargewichte der Polymeren sind unbefriedigend und der Gelgehalt der Polymere ist z.B. bei der Herstellung von Butylkautschuken zu hoch.

Es wurde nun überraschend gefunden, daß man die obengenannten Nachteile bei der (Co)polymerisation von Isoolefinen vermeiden kann, wenn man die (Co)polymerisation von Isoolefinen in Gegenwart des nachstehend beschriebenen vanadiumhaltigen Initiatorsystems durchführt.

Gegenstand der vorliegenden Erfindung ist demnach ein Initiatorsystem zur Polymerisation von Isoolefinen mit 4 bis 16 Kohlenstoffatomen, gegebenenfalls mit mit Isoolefinen copolymerisierbaren Monomeren, bestehend aus einem oder mehreren aromatischen oder heteroaromatischen, polycyclischen Kohlenwasserstoffen (Coinitiator) und einer gealterten, organischen Lösung von Vanadiumtetrachlorid (Initiator), wobei die Konzentration des Vanadiumtetrachlorids 0,01 mmol bis 500 mmol pro Liter Lösungsmittel beträgt und das molare Verhältnis von gealtertem Vanadiumtetrachlorid zu polycyclischen Kohlenwasserstoffen im Bereich von 100:1 bis 1:100 liegt.

Als Coinitiatoren werden bei dem erfindungsgemäßen Initiatorsystem aromatische oder heteroaromatische, polycyclische (mindestens bicyclische) Kohlenwasserstoffe allein oder in Kombination untereinander eingesetzt. Die aromatischen oder heteroaromatischen polycyclischen Kohlenwasserstoffe können gegebenenfalls mit Alkyl- oder Alkylengruppen substituiert sein. Weitere mögliche Substituenten sind Halogene, Cyanogruppen, Nitrogruppen, Alkoxygruppen sowie gegebenenfalls substituierte Phenylgruppen. Bevorzugt werden bi-, tri- und tetracyclische aromatische oder heteroaromatische Kohlenwasserstoffe verwendet. Beispiele für geeignete Coinitiatoren sind z.B. Naphthalin, Anthracen, Inden, Cumaron, Carbazol, N-Vinylcarbazol, Biphenyl, p-Terphenyl, Acenaphthen, Acenaphthylen, Fluoranthen, Fluoren, Phenanthren, Pyren, sowie octyliertes Diphenylamin (Vulkanox OCD von BAYER).

Die Bedingungen für die Alterung des Initiators sind abhängig vom verwendeten Lösungsmittel. Geeignete Lösungsmittel für die Alterung des Initiators im Sinne der Erfindung sind Kohlenwasserstoffe, insbesondere aliphatische und/oder aromatische Kohlenwasserstoffe ohne funktionelle Substituenten mit 4 bis 20 Kohlenstoffatomen und mit einem Siedepunkt oberhalb -20°C. Bevorzugt werden Lösungsmittel mit einem Siedepunkt oberhalb +20°C und einem Schmelzpunkt unterhalb 20°C, besonders bevorzugt werden Lösungsmittel mit einem Schmelzpunkt unterhalb 0°C. Diese Lösungsmittel können allein oder in Kombination untereinander eingesetzt werden. Beispiele für solche Kohlenwasserstoffe sind: Pentan, Hexan, 2,3-Dimethylbutan, Heptan, Cyclopentan, Cyclohexan und/oder Methylcyclohexan, besonders bevorzugt sind Pentan und/oder Hexan.

Die Alterung des Initiators kann prinzipiell in einem weiten Temperaturbereich erfolgen und wird grundsätzlich nur durch den Schmelzpunkt und den Siedepunkt des verwendeten Lösungsmittels begrenzt. Bevorzugt wird ein Temperaturbereich von 0 bis 40°C, besonders bevorzugt +10 bis +30°C. Die Alterung kann in Gegenwart von Licht oder aber in der Dunkelheit erfolgen. Bevorzugt wird unter Tageslicht oder Kunstlicht (im sichtbaren oder ultravioletten Bereich) gearbeitet.

Die optimale Alterungszeit ist abhängig vom verwendeten Lösungsmittel, der Temperatur, der Lichtmenge und der Konzentration der Lösung. Alterungszeiten von einigen Minuten bis zu mehreren Wochen sind möglich, bevorzugt werden Alterungszeiten von einigen Stunden bis zu einigen Tagen, besonders bevorzugt werden Alterungszeiten von einer Stunde bis zu 24 Stunden, insbesondere 24 Stunden.

Die Alterung des Vanadiumtetrachlorids in dem entsprechenden organischen Lösungsmittel kann in Abwesenheit oder in Gegenwart der Coinitiatoren erfolgen. In einer bevorzugten Ausführungsform erfolgt die Alterung in Abwesenheit der Coinitiatoren.

Gegenstand der Erfindung ist demnach auch ein Verfahren zur Herstellung des zuvor beschriebenen Initiatorsystems, das dadurch gekennzeichnet ist, daß man das Vanadiumtetrachlorid in einem der zuvor beschriebenen organischen Lösungsmittel löst und die so hergestellte Lösung in Gegenwart von Licht oder in Abwesenheit von Licht einem Alterungsprozeß unterwirft, wobei die Konzentration des Vanadiumtetrachlorids 0,01 mmol bis 500 mmol pro Liter Lösungsmittel beträgt.

Weiterhin ist Gegenstand der Erfindung die Verwendung des Initiatorsystems zur Herstellung von Polyisoolefinen, indem man Isoolefine mit 4 bis 16 Kohlenstoffatomen, gegebenenfalls mit konjugierten Diolefinen mit 4 bis 6 Kohlenstoffatomen und/oder kationisch polymerisierbaren ein- oder mehrfacher ungesättigten Verbindungen mit 4 bis 16 Kohlenstoffatomen bei Temperaturen von -100°C bis +20°C, bevorzugt -60°C bis 0°C, insbesondere -45°C bis -15°C, und Drücken von 0,001 bis 70 bar, bevorzugt 0,1 bis 2 bar, polymerisiert.

Zum Entfernen von Verunreinigungen, insbesondere Feuchtigkeit bei der Polymerisation, können gegebenenfalls als Trocknungsmittel Alkali- und Erdalkalimetalle, deren Amalgame mit Quecksilber oder Wasserstoffverbindungen der Metalle der I., II., III. und IV. Gruppe des Periodischen Systems dem Monomergemisch zugesetzt werden. Auf diese Weise läßt sich die Menge des benötigten Katalysators reduzieren.

Die Konzentration des gealterten Vanadiumtetrachlorids beträgt bevorzugt 0,01 mmol bis 500 mmol pro Liter Lösungsmittel. Das molare Verhältnis von gealtertem Vanadiumtetrachlorid zu den oben erwähnten polycyclischen Kohlenwasserstoffen liegt bevorzugt im Bereich von 10:1 bis 1:10.

Als Isoolefine mit 4 bis 16 Kohlenstoffatomen, bevorzugt 4 bis 8 Kohlenstoffatomen, werden beispielsweise genannt: Isobuten, 2-Methylbuten-1, 3-Methylbuten-1, 4-Methylpenten-1 und β-Pinen, bevorzugt Isobuten und 2-Methylbuten-1; als konjugierte Diolefine mit 4 bis 6 Kohlenstoffatomen: Isopren, Butadien, 2,3-Dimethylbutadien, Cyclopentadien, Methylcyclopentadien, 1,3-Cyclohexadien, bevorzugt Isopren, und als kationisch polymerisierbare, ein- oder mehrfach ungesättigte, organische Verbindungen mit 4 bis 16 Kohlenstoffatomen, bevorzugt 4 bis 10 Kohlenstoffatomen: Styrol, 4-Methylsryrol, Divinylbenzol, α-Methylstyrol, Dimethylfulven, bevorzugt 4-Methylstyrol und Divinylbenzol.

Falls nach dem erfindungsgemäßen Verfahren eine Copolymerisation der genannten Isoolefine mit den genannten konjugierten Diolefinen und/oder den kationisch polymerisierbaren, ein- oder mehrfach ungesättigten organischen Verbindungen durchgeführt werden soll, ist ein Gewichtsverhältnis von Isoolefinen zu Diolefinen und ungesättigten organischen Verbindungen von 95:5 bis 99,5:0,5 bevorzugt.

Die Polymerisation kann im Prinzip bei unterschiedlichen Drücken durchgeführt werden. Dabei sind sowohl Überdruck als auch Unterdruck zulässig. Bevorzugt wird der Druck derart eingestellt, daß das Reaktionsgemisch bei der gewünschten Reaktionstemperatur siedet und somit die bei der Polymerisation entstehende Reaktionswärme durch Siedekühlung abgeführt werden kann. Der ideale Druck wird bestimmt durch die Siedepunkte und die Menge der verwendeten Lösungsmittel, die Siedepunkte der eingesetzten Monomeren sowie die gewünschte Reaktionstemperatur.

Wenn z.B. ohne Lösungsmittel gearbeitet wird (Massepolymerisation), so errechnet sich der ideale Druck nach der folgenden Formel:

$$p = 49071249{,}2 * e^{\frac{-2869}{T}}$$

In dieser Formel steht T für die Reaktionstemperatur in Kelvin und p für den Druck in mbar.

Der tatsächlich verwendete Druck kann in Einzelfällen um bis zu 100 mbar sowohl zu größeren als auch zu kleineren Werten von diesem Idealwert abweichen. Bevorzugt sind Abweichungen <50 mbar, besonders bevorzugt Abweichungen <20 mbar.

Die Polymerisation kann sowohl in kontinuierlicher als auch in diskontinuierlicher Fahrweise durchgeführt werden.

In einer bevorzugten Ausführungsform wird die Polymerisation in der diskontinuierlichen Fahrweise beispielsweise wie folgt durchgeführt:

Der auf Reaktionstemperatur vorgekühlte Reaktor wird mit dem Lösungsmittel, dem Coinitiator und den Monomeren beschickt. Der Initiator wird anschließend mit einer Geschwindigkeit von 1 ml/Stunde bis 1000 ml/Stunde zugepumpt, bis sich eine exotherme Reaktion einstellt. Alle Operationen werden unter Schutzgas oder einem leichten Vakuum durchgeführt. Der Verlauf der Reaktion wird anhand der Wärmeentwicklung verfolgt. Nach Beendigung der exothermen Reaktion wird mit einem phenolischen Antioxidans, wie z.B. 2,6-Di-tert.-butyl-4-methyl-phenol, gelöst in Ethanol, abgestoppt.

Für die erfindungsgemäße Polymerisation ist es von großer Bedeutung, die gealterten Vanadiumtetrachlorid-Kohlenwasserstofflösungen (Initiator) in Kombination mit den genannten Coinitiatoren einzusetzen.

Geeignete Lösungsmittel für die Polymerisation im Sinne der Erfindung sind aliphatische und/oder aromatische (gegebenenfalls halogenierte) Kohlenwasserstoffe ohne funktionelle Substituenten. Bevorzugt werden Lösungsmittel mit einem Schmelzpunkt unterhalb 20°C. Besonders bevorzugt werden Lösungsmittel mit einem Schmelzpunkt unterhalb 0°C. Beispiele für geeignete aliphatische Lösungsmittel sind: Methylchlorid, Methylenchlorid, Chloroform, Tetrachlorkohlenstoff, Propan, Butan, Pentan, Hexan, 2,3-Dimethylbutan, Heptan, Cyclohexan, Methylcyclohexan, Chlorethan, 1,1-Dichlorethan, 1,2-Dichlorethan, 1,1,1-Trichlorethan, 1,1,2,2-Tetrachlorethan, Pentachlorethan, Hexachlorethan, 1-Chlorpropan, 2-Chlorpropan, 1,2-Dichlorpropan, 1,2,3-Trichlorpropan, 1-Chlorbutan, 2-Chlorbutan, 1,4-Dichlorbutan, 1-Chlor-2-methylpropan, 1-Chlorpentan, 2,4-Dimethylpentan, 2,2,4-Trimethylpentan, Dodecan, 1-Chlordodecan, Petrolether, Chlorcyclohexan, Cyclododecan und/oder Decalin. Beispiele für aromatische Lösungsmittel sind: Benzol, Toluol, Chlorbenzol, 1,2-Dichlorbenzol, Ethylbenzol, Xylol, 1,2,3-Trimethylbenzol, 1,2,4-Trimethylbenzol, 1,3,5-Trimethylbenzol, Diethylbenzol, 1,2,3,4-Tetramethylbenzol, 1,2,3,5-Tetramethylbenzol, 1,2,4,5-Tetramethylbenzol, Pentamethylbenzol, 1-Isopropyl-4-methylbenzol, 1,3-Diisopropylbenzol, 1,4-Diisopropylbenzol, 1-tert.-Butyl-3,5-dimethylbenzol und/oder 1,3,5-Triisopropylbenzol.

Es ist besonders überraschend, daß es mit Hilfe des erfindungsgemäßen Initiatorsystems, bestehend aus einer gealterten organischen Lösung von Vanadiumtetrachlorid (Initiator) in Kombination mit einem oder mehreren aromatischen oder heteroaromatischen polycyclischen Kohlenwasserstoffen (Coinitiator) gelingt, Polyisoolefine, insbesondere Butylkautschuke, bei relativ hohen Temperaturen (-40°C) mit einem nur geringen Gelanteil und einem ausreichend hohen Molekulargewicht herzustellen, obwohl es nach dem Stand der Technik zu erwarten wäre, daß bei Verwendung von Vanadiumtetrachlorid als Initiator die Polymerisation von Isoolefinen mit einem relativ hohen Gelanteil verbunden ist, vielfach gekoppelt mit einem nicht ausreichend hohem Molekulargewicht für Kautschukanwendungen.

**Beispiele**

*Experimentelle Einzelheiten*

Die **Gelgehalte** wurden in Toluol nach einer Lösezeit von 24 Stunden bei 30°C mit einer Probenkonzentration von 12,5 g/l bestimmt. Die Abtrennung der unlöslichen Anteile erfolgte durch Ultrazentrifugation (1 Stunde bei 20 000 Umdrehungen/Minute und 25°C).

Die **Lösungsviskosität** $\eta$ der löslichen Anteile wurde in Toluol bei 30°C durch Ubbelohde-Kapillarviskosimetrie bestimmt.

Das aus der Lösungsviskosität berechnete **Molekulargewicht Mv** wurde nach der folgenden Formel bestimmt:
$\ln(Mv) = 12{,}48 + 1{,}565 * \ln \eta$ .

Die **GPC-Untersuchungen** mit Hilfe der GPC-Viskosimetrie -Kopplung wurden in einem Instrument durchgeführt, das mit acht Styragel Säulen der Größen 100, 1000(2x), $10^4$ (2x), $10^5$ (2x) und $10^6$ nm ausgerüstet ist. Die Gesamtsäulenlänge beträgt 976 cm. Das Elutionsmittel THF wurde mit 0,5 ml/min gepumpt. 1,93 ml Fraktionen wurden online in einem Ubbelohde Viskosimeter vermessen. Die $M_v$-Werte wurden mit den Konstanten K = 5 x $10^{-4}$ dl/g und $\alpha$ = 0,6 berechnet. Die Auswertung erfolgte durch universelle Eichung nach Benoit mit PC-Software der Kirschbaum & Schroeder GmbH.

Die Messung der **Mooney-Viskositäten** erfolgte nach 8 Minuten bei einer Temperatur von 125°C.

Die Messung der **UV-Spektren** der Katalysatorlösungen erfolgten mit einem UV-Spektrometer der Firma Perkin-Elmer bei Raumtemperatur mit einer unverdünnten Katalysatorlösung in einer Küvette mit 0,01 mm Schichtdicke.

Die verwendeten **Lösungsmittel** wurden, sofern nicht anders angegeben, vor Gebrauch zur Reinigung unter einer Argonatmosphäre über Calciumhydrid destilliert.

Das bei den Polymerisationen eingesetzte **Isobuten** wurde zur Trocknung durch eine mit Natrium auf Aluminiumoxid gefüllte Säule geleitet.

Das verwendete **Isopren** wurde zur Entfernung des Stabilisators unter Argon durch eine Säule mit getrocknetem Aluminiumoxid filtriert und in dieser Form für die Polymerisation eingesetzt.

Die anderen verwendeten **Comonomeren** wurden vor Gebrauch zur Reinigung unter einer Argonatmosphäre über Calciumhydrid destilliert.

*Initiatorsynthese (Alterung des VCl$_4$)*

### Beispiel 1

500 ml Hexan wurden unter Argon vorgelegt. 24,1 g (0,125 mol) Vanadiumtetrachlorid wurden zugegeben. Die Lösung wurde 7 Tage unter leichtem Rühren dem Tageslicht ausgesetzt, wobei eine deutliche Vertiefung der Rotfärbung und das Auftreten geringer Mengen eines Feststoffs beobachtet wurden. Das Ausmaß dieser Farbänderung läßt sich am Vergleich der UV-Spektren erkennen, die in dem unten angefügten Diagramm nebeneinander dargestellt sind.

UV-Spektren als Funktion der Alterungsdauer

Der ausgefallene Feststoff (<<1 %) wurde unter Argon abfiltriert. Die verbleibende Lösung wurde unter Argon aufbewahrt und in dieser Form für die Initiierung der Polymerisation benutzt.

Bei sachgemäßer Aufbewahrung kann diese Lösung mehrere Wochen verwendet werden. Evtl. bei der Lagerung auftretende leichte Trübungen können durch Filtration entfernt werden.

### Beispiel 2

Analog Beispiel 1, die Alterungszeit betrug hier 2 h.

### Beispiel 3

100 ml 2,3-Dimethylbutan wurden unter Argon vorgelegt. 4,8188 g (0,025 mol) Vanadiumtetrachlorid wurden zugegeben. Die Lösung wurde 9 Tage unter leichtem Rühren dem Tageslicht ausgesetzt, wobei eine deutliche Vertiefung der Braunfärbung und das Auftreten geringer Mengen eines Feststoffs beobachtet wurden. Der ausgefallene Feststoff wurde unter Argon abfiltriert. Die verbleibende Lösung wurde in dieser Form für die Initiierung der Polymerisation benutzt.

### Beispiel 4

500 ml durch Abdestillieren von $LiAlH_4$ getrocknetes Toluol werden bei Raumtemperatur mit 125 mmol $VCl_4$ versetzt und 2 Stunden gerührt. Der entstehende Slurry wird tiefschwarz. Der Niederschlag wird abfiltriert.

### Beispiel 5

50 ml durch Abdestillieren von $CaH_2$ getrocknetes Methylcyclohexan werden bei Raumtemperatur mit 12,5 mmol $VCl_4$ versetzt und 24 Stunden gerührt. Die klare Lösung ist tiefrot und wird ohne Filtration zur Polymerisation eingesetzt.

### Beispiel 6

100 ml durch Abdestillieren von $CaH_2$ getrocknetes Heptan werden unter Argon mit 25 mmol $VCl_4$ versetzt und 24 Stunden gerührt. Es resultierte eine tiefrote klare Lösung.

*Polymerisationen*

### Beispiel 7

500 g Isobuten und 11,918 g (1,96 mol-%) Isopren wurden unter Argon unter Lichtausschluß bei einer Temperatur von -40°C vorgelegt. Es wurden 0,036 g Anthracen und 1,6 ml Initiatorlösung aus Beispiel 1 zugegeben. Nach einer Reaktionsdauer von 15 Minuten wurde die exotherme Reaktion wegen der zunehmenden Viskosität durch Zugabe einer vorgekühlen Lösung von 1 g 2,2'-Methylenbis(4-methyl-6-tert-butylphenol) (Vulkanox BKF der Firma Bayer AG Leverkusen) in 250 ml Ethanol abgestoppt. Das ausgefallene Polymer wurde nach dem Abdekantieren der Flüssigkeit mit 2,5 l Methanol gewaschen, zu einem dünnen Fell ausgewalzt und im Vakuum bei 50°C einen Tag getrocknet. (Ausbeute: 91,3 g = 17,8 %)
Das so erhaltene leicht braune Polymer hatte einen Mooney-Wert von 55, einen Gelanteil von 3,1 % und einen Staudinger-Index von 1,0632 dl/g.

### Beispiel 8 (Vergleichsbeispiel)

600 g Isobuten und 13,63 g (200 mmol) Isopren wurden unter Argon bei einer Temperatur von -40°C vorgelegt. In Gegenwart von Licht wurden 4 ml Initiatorlösung aus Beispiel 2 zugegeben. Nach einer Reaktionsdauer von 15 Minuten wurde die exotherme Reaktion wegen der zunehmenden Viskosität durch Zugabe einer vorgekühlen Lösung von 1 g 2,2'-Methylen-bis(4-methyl-6-tert-butylphenol) (Vulkanox BKF der Firma Bayer AG Leverkusen) in 250 ml Ethanol abgestoppt. Das ausgefallene Polymer wurde nach dem Abdekantieren der Flüssigkeit mit 2,5 l Methanol gewaschen, zu einem dünnen Fell ausgewalzt und im Vakuum bei 50°C einen Tag getrocknet. (Ausbeute: 92,6 g = 15 %)
Das so erhaltene leicht braune Polymer hatte einen Mooney-Wert von 98, einen Gelanteil von 43 %. Der Staudinger-Index der löslichen Anteile betrug 1,55 dl/g.

### Beispiel 9

Die Polymerisation von Beispiel 7 wurde wiederholt, mit dem Unterschied, daß anstelle des Initiators aus Beispiel 1 die Initiatorlösung aus Beispiel 3 eingesetzt wurde. Ausbeute: 110 g = 21,5%.
Das so erhaltene Polymer hatte einen Mooney-Wert von 60,5, einen Gelanteil von 3,5 % und einen Staudinger-Index von 1,359 dl/g.

### Beispiel 10 (Vergleichsbeispiel)

Die Polymerisation von Beispiel 7 wurde wiederholt, mit dem Unterschied, daß anstelle des Initiators aus Beispiel 1 die äquimolare Menge Vanadiumtetrachlorid, gelöst in Hexan, eingesetzt wurde. Ausbeute: 124 g = 24 %.
Das so erhaltene Polymer hatte einen Mooney-Wert von 65, einen Gelanteil von 23,3 % und einen Staudinger-Index von 0,64 dl/g.

## Beispiel 11

598 g Isobuten und 13,63 g (200 mmol) Isopren wurden unter Argon bei einer Temperatur von -40°C vorgelegt. In Gegenwart von Licht wurden 8 ml Initiatorlösung, hergestellt analog Beispiel 1 mit einer Alterungszeit von 96 h zugegeben. Nach einer Reaktionsdauer von 20 Minuten wurde die exotherme Reaktion wegen der zunehmenden Viskosität durch Zugabe einer vorgekühlen Lösung von 1 g 2,2'-Methylen-bis(4-methyl-6-tert-butylphenol) (Vulkanox BKF der Firma Bayer AG Leverkusen) in 250 ml Ethanol abgestoppt. Das ausgefallene Polymer wurde nach dem Abdekantieren der Flüssigkeit mit 2,5 l Methanol gewaschen, zu einem dünnen Fell ausgewalzt und im Vakuum bei 50°C einen Tag getrocknet. (Ausbeute: 74,2 g = 12,1 %)

Das so erhaltene leicht braune Polymer hatte einen Mooney-Wert (125°C, 1+8') von 30 und einen Gelgehalt von 43 %. Der Staudinger-Index der löslichen Anteile betrug 0,6 dl/g.

## Beispiel 12

600 g Isobuten und 13,63 g (200 mmol) Isopren wurden unter Argon bei einer Temperatur von -40°C vorgelegt. Unter Ausschluß von Licht wurden 10 ml Initiatorlösung, hergestellt analog Beispiel 6 mit einer Alterungszeit von 168 h zugegeben. Nach einer Reaktionsdauer von 17 Minuten wurde die exotherme Reaktion wegen der zunehmenden Viskosität durch Zugabe einer vorgekühlen Lösung von 1 g 2,2'-Methylen-bis(4-methyl-6-tert-butylphenol) (Vulkanox BKF der Firma Bayer AG Leverkusen) in 250 ml Ethanol abgestoppt. Das ausgefallene Polymer wurde nach dem Abdekantieren der Flüssigkeit mit 2,5 l Methanol gewaschen, zu einem dünnen Fell ausgewalzt und im Vakuum bei 50°C einen Tag getrocknet. (Ausbeute: 61,4 g = 10 %)

Das so erhaltene leicht braune Polymer hatte einen Mooney-Wert (125°C, 1+8') von 94 und einen Gelgehalt von 37 %. Der Staudinger-Index der löslichen Anteile betrug 1,64 dl/g.

## Beispiel 13

600 g Isobuten und 13,63 g (200 mmol) Isopren wurden unter Argon bei einer Temperatur von -40°C vorgelegt. In Gegenwart von Licht wurden 8 ml Initiatorlösung, hergestellt analog Beispiel 4 mit einer Alterungszeit von 2 h zugegeben. Nach einer Reaktionsdauer von 15 Minuten wurde die exotherme Reaktion wegen der zunehmenden Viskosität durch Zugabe einer vorgekühlen Lösung von 1 g 2,2'-Methylen-bis(4-methyl-6-tert-butylphenol) (Vulkanox BKF der Firma Bayer AG Leverkusen) in 250 ml Ethanol abgestoppt. Das ausgefallene Polymer wurde nach dem Abdekantieren der Flüssigkeit mit 2,5 l Methanol gewaschen, zu einem dünnen Fell ausgewalzt und im Vakuum bei 50°C einen Tag getrocknet. (Ausbeute: 76,7 g = 12,5 %)

Das so erhaltene leicht braune Polymer hatte einen Mooney-Wert (125°C, 1+8') von 77 und einen Gelgehalt von 49 %. Der Staudinger-Index der löslichen Anteile betrug 1,36 dl/g.

## Beispiel 14

Analog Beispiel 13; die Polymerisation wurde in Abwesenheit von Licht durchgeführt. Die Ausbeute betrug: 59,6 g = 9,7 %.

Das so erhaltene leicht braune Polymer hatte einen Mooney-Wert (125°C, 1+8') von 67,5 und einen Gelgehalt von 59 %. Der Staudinger-Index der löslichen Anteile betrug 1,0 dl/g.

## Beispiel 15

1000 ml n-Hexan, 200 g Isobuten und 75 mmol Isopren wurden bei -40°C unter Argon vorgelegt und mit 20 ml Initiatorlösung analog Beispiel 5 versetzt. Nach 120 min rühren bei -40°C wurde ein Umsatz von 52 % erreicht. Das Produkt hat einen Gelgehalt von 30 %, der Staudinger-Index der löslichen Anteile betrug 0,37 dl/g. Das Polymer hatte eine klebrige Konsistenz. Mit Hilfe der Gelpermeationschromatographie wurde $M_w$ = 400 kg/mol und $M_n$ = 8 kg/mol bestimmt. Der Anteil der langkettenverzweigten Polymere wurde mit 5 % bestimmt.

## Beispiel 16 (Auswirkung verschiedener Alterungszeiten)

Um die Auswirkung unterschiedlicher Alterungszeiten des Initiators auf die Ergebnisse der Polymerisation zu demonstrieren, wurde die Polymerisation aus Beispiel 9 wiederholt, wobei der eingesetzte Initiator aus Beispiel 3 unterschiedlich lange gealtert wurde. Die Ergebnisse sind in der folgenden Tabelle zusammengefaßt.

| Alterungsdauer (Tage) | Ausbeute (%) | Mooney-Wert | Gelgehalt (%) |
|---|---|---|---|
| 3 | 17 | 82 | 31,4 |
| 9 | 21,5 | 60,5 | 3,5 |
| 14 | 0 (Keine Reaktion!) | - | - |

**Beispiel 17** (Polymerprüfungen)

Nach der Vorschrift von Beispiel 7 wurden 500 g Polymer hergestellt. Das Material hatte einen Mooney-Wert von 51, einen Gelgehalt von 2,1 %, ein $M_n$ von 31,8 kg/mol, ein $M_w$ von 8590,7 kg/mol und einen Isoprengehalt von 2,2 mol-%.

Aus diesem Polymer wurde auf einer Laborwalze eine Kautschukmischung nach der folgenden Rezeptur hergestellt:

| Substanz | Menge (phr) |
|---|---|
| Polymer | 100 |
| Ruß N 660 | 65 |
| Sunpar 2280 | 22 |
| Stearinsäure | 1 |
| Zinkoxid | 5 |
| Schwefel | 1,8 |
| Vulkacit Mercapto (MBT) | 0,5 |
| Vulkacit Thiuram (TMTD) | 1 |

Nach der gleichen Rezeptur wurde eine Vergleichsmischung mit Polysar Butyl 301 als Polymer angefertigt. Beide Mischungen wurden sowohl im unvulkanisierten als auch im vulkanisierten (10 min bei 180°C) Zustand miteinander verglichen. Die Ergebnisse sind in den folgenden Tabellen zusammengefaßt.

| *unvulkanisiert* | | |
|---|---|---|
| Eigenschaft | Butyl 301 | Beispiel 7 |
| Mooney Relaxation (30 sec. bei 100°C) (%) | 4,9 | 10,8 |
| Mooney-Scorch bei 135°C | 17,5 | 14,1 |
| Green Strength 100 % (Mpa) | 0,3 | 0,29 |
| Green Strength 300 % (Mpa) | 0,23 | 0,3 |

| Vulkanisation: Monsanto Rheometer MDR 2000 bei 180°C | | |
|---|---|---|
| Eigenschaft | Butyl 301 | Beispiel 7 |
| MIN | 1,35 | 1,25 |
| Ts1 | 1,09 | 1,01 |
| T50 | 1,89 | 1,87 |
| T90 | 5,73 | 5,53 |
| MH | 10,58 | 10,05 |

| vulkanisiert | | |
|---|---|---|
| Eigenschaft | Butyl 301 | Beispiel 7 |
| Reißfestigkeit (Mpa) | 12,62 | 11,71 |
| Reißdehnung (%) | 623 | 549 |
| Modul 100 % (Mpa) | 1,55 | 1,86 |
| Modul 300 % (Mpa) | 4,99 | 5,99 |
| Härte bei 23°C | 53 | 54 |
| Luftpermeabilität bei 65 °C | 4,85 | 4,79 |

**Patentansprüche**

1. Initiatorsystem zur Polymerisation von Isoolefinen mit 4 bis 16 Kohlenstoffatomen, gegebenenfalls mit mit Isoolefinen polymerisierbaren Monomeren, bestehend aus einem oder mehreren aromatischen oder heteroaromatischen, polycyclischen Kohlenwasserstoffen und einer gealterten, organischen Lösung von Vanadiumtetrachlorid, wobei die Konzentration des Vanadiumtetrachlorids 0,01 mmol bis 500 mmol pro Liter Lösungsmittel beträgt und das molare Verhältnis von gealterten Vanadiumtetrachlorid zu polycyclischen Kohlenwasserstoffen im Bereich von 100:1 bis 1:100 liegt.

2. Verfahren zur Herstellung des Initiatorsystems nach Anspruch 1, dadurch gekennzeichnet, daß man das Vanadiumtetrachlorid in einem organischen Lösungsmittel löst und die so hergestellte Lösung einem Alterungsprozeß in Gegenwart von Licht oder in Abwesenheit von Licht unterwirft.

3. Verwendung des nach Anspruch 1 beanspruchten Initiatorsystems zur Herstellung von (Co)polymeren aus Isoolefinen mit 4 bis 16 Kohlenstoffatomen mit gegebenenfalls mit Isoolefinen copolymerisierbaren Monomeren, insbesondere zur Herstellung von Butylkautschuken.

**Europäisches Patentamt**

# EUROPÄISCHER RECHERCHENBERICHT

Nummer der Anmeldung

EP 97 11 0470

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | TOMAN L: "The initiating effect of vinyl aromatic and diene monomers on the polymerization of isobutylene with vanadium tetrachloride" JOURNAL OF MACROMOLECULAR SCIENCE, CHEM, Bd. a15, Nr. 8, 1981, Seiten 1533-1543, XP002042262 * das ganze Dokument * ----- | 1 | C08F10/10 C08F4/20 |
| | | | RECHERCHIERTE SACHGEBIETE (Int.Cl.6) |
| | | | C08F |

Der vorliegende Recherchenbericht wurde für alle Patentansprüche erstellt

| Recherchenort | Abschlußdatum der Recherche | Prüfer |
|---|---|---|
| DEN HAAG | 7.Oktober 1997 | Fischer, B |

EPO FORM 1503 03.82 (P04C03)